# EUROPÄISCHE PATENTSCHRIFT

(11) **EP 3 269 518 B1**
(45) Veröffentlichungstag und Bekanntmachung des Hinweises auf die Patenterteilung: **13.10.2021**
(21) Anmeldenummer: 16179124.9
(22) Anmeldetag: 12.07.2016
(51) Int. Cl.: B25G 1/01, B62K 21/26, B62K 21/14

(54) **HANDGRIFF**
HANDLE
POIGNEE

(43) Veröffentlichungstag der Anmeldung: 17.01.2018
(73) Patentinhaber: Drive Medical GmbH & Co. KG, 88316 Isny im Allgäu (DE)
(72) Erfinder: Kempter, Robert, 88316 Isny (DE)
(74) Vertreter: VKK Patentanwälte PartG mbB

(56) Entgegenhaltungen:
- EP-A1- 2 123 548
- CN-Y- 201 305 097
- DE-C- 810 584
- DE-U1-202013 007 401
- FR-A1- 2 690 128
- GB-A- 153 636
- US-A- 5 140 867
- None

## Beschreibung

Die vorliegende Erfindung betrifft einen Handgriff, wie er insbesondere an Rollstühlen, Rollatoren, Kinderwagen, Einkaufwagen, Gepäckwagen, Flughafentransportstühlen aber auch an Fahrrädern, Mountainbikes oder Gehhilfen angeordnet ist, insbesondere auch im Bereich von deren Lenkern. Die genannten Vorrichtungen weisen üblicherweise einen Rohrrahmen auf, an dem neben dem Handgriff auch Räder, Sitze, Antriebe und dergleichen mehr angeordnet sind.

Diese Handgriffe weisen dabei üblicherweise einen mehr oder weniger ergonomisch geformten Griff auf, in dem oder an dem ein Rohrende angeordnet ist, bzw. der über ein Rohrende geschoben oder an diesem befestigt ist.

In Blickrichtung der Rohrlängsachse gesehen, übt ein Benutzer auf diese Handgriffe eine nicht nur rein axial wirkende Kraft aus. Stützt sich ein Benutzer auf diesen Handgriffen oder dem Lenker ab, erzeugt er damit eine auch radial wirkende bzw. eine zur Längsachse des Rohres in einem Winkel angreifende Kraft auf dasjenige Rohr, welches den Handgriff trägt oder diesen bildet. Gleiches gilt, wenn ein Benutzer den Rollstuhl, Rollator, Gepäckwagen, etc. an diesen Griffen bewegt, schiebt oder lenkt. Andererseits teilen sich dem bewegenden Benutzer auch Kräfte mit, die vom Untergrund über Räder oder andere Kontaktelemente auf den Rohrrahmen und damit letzten Endes auf dasjenige Rohr übertragen werden, an dem der Benutzer den Rohrrahmen kontaktiert. Bei diesen Kräften handelt es sich insbesondere um Vibrationen oder Stöße, die von einer Bewegung über einen unebenen, nicht glatten Boden hervorgerufen werden. Es ist daher seit langem bekannt, die an einem Rohr befestigten Griffe aus einem dämpfenden Material zu fertigen oder Stoßdämpfer an den an dem Rohrrahmen befestigten Rädern oder an oder in dem Rohrrahmen selber vorzusehen. Diese reichen jedoch oftmals nicht aus, einem Benutzer ein möglichst vibrations- und damit ermüdungsfreies, bzw. sogar schmerzfreies oder mit weniger Schmerzen verbundenes Bewegen des den Rohrrahmen aufweisenden Rollators, Fahrrads, Gehstocks, etc. zu ermöglichen.

Aus der US 5 140 867 A ist ein Handgriff bekannt, bei dem zwischen zwei Rohrenden ein diese beabstandender zweiteiliger Körper bekannt, dessen beiden Teile aneinander geführt in einer Achse gegeneinander verschieblich sind. Im Inneren dieses zweiteiligen Körpers ist ein diesen durchsetzendes Federelement in einer Bohrung mit Spielpassung vorgesehen, dass bei Verschiebung der beiden Teile gegeneinander eine Rückstellkraft aufbringt und beide Teile in ihre Nulllage verbringt. Das Dokument US 5140 867 A zeigt einen Handgriff mit den Merkmalen gemäß der Präambel von Anspruch 1.

Es ist daher Aufgabe der Erfindung, einen Handgriff anzugeben, bei der nicht-axial gerichtete radiale Kräfte beliebiger Richtung angemessen gedämpft werden.

Diese Aufgabe wird erfindungsgemäß gelöst durch einen Handgriff gemäß Anspruch 1.

Die Erfindung versteht dabei unter einem elastischen Körper insbesondere einen länglichen Körper aus einem Kunststoff, insbesondere einem Elastomer, vorzugsweise mit einer Shore-A-Härte von 50 bis 100, insbesondere 65 bis 85, bevorzugt von 75 bis 80, dessen Querschnittsfläche in Form und Größe an die miteinander zu verbindenden, axial voneinander beabstandeten Rohre angepasst ist. Diese sind in der Regel hohl und bestehen üblicherweise aus Aluminium oder einem Edelstahl oder einem anderen Metall oder einer Metalllegierung, jedoch ist die Erfindung auch dazu geeignet, Kunststoffrohre miteinander zu verbinden. Der Körper weist eine solche axiale Gesamtlänge auf, die zum einen seine sichere Befestigung in und/oder an den beiden Rohren als auch eine Biegefähigkeit ermöglicht, die zur Dämpfung der übertragenen Kräfte ausreichend ist. Die Erfindung versteht unter Biegesteifigkeit des Materials des Körpers das Maß der sich bei in etwa radial gerichteter Kraftausübung auf eines seiner Enden einstellenden radialen Auslenkung im Verhältnis zum festgelegten, bzw. nicht mit Kraft beaufschlagten gegenüberliegenden Ende. Erfindungsgemäß ist ein Verstärkungselement aus einem zweiten Material mit einer zweiten Biegesteifigkeit vorgesehen, wobei die erste Biegesteifigkeit kleiner als die zweite Biegesteifigkeit ist. Hierdurch wird eine Versteifung des ersten Materials erreicht, das daher elastischer und damit einfacher verformbar sein kann, um hierdurch seine Befestigung an oder in den beiden Rohren zu erleichtern, beispielsweise durch Einschieben in dieselben. Hierzu dienen die Befestigungsenden des Körpers mit denen dieser an den Rohren angeordnet ist. Das Maß der Biegsamkeit des erfindungsgemäßen Handgriffs wird in erster Linie über die biegewirksame axiale Länge des elastischen Körpers bestimmt. Unter dieser wird erfindungsgemäß ein Teil oder die gesamte axiale Länge verstanden, die zwischen den Rohren befindlich ist und damit auch den axialen Abstand der beiden Rohrenden voneinander definiert.

In Weiterbildung der Erfindung ist vorgesehen, dass das Verstärkungselement aus Metall besteht oder ein Metall aufweist. Metall ist wesentlich biegesteifer als der elastische Körper aus einem Kunststoff, insbesondere Elastomer, und erhöht damit in Kombination mit diesem die Gesamtbiegesteifigkeit der Vorrichtung. Das Verstärkungselement ist erfindungsgemäß an dem elastischen Körper angeordnet, insbesondere ganz oder teilweise in diesem aufgenommen oder umgibt diesen, mindestens teilweise. Es kann sich erfindungsgemäß um ein einziges Verstärkungselement handeln, beispielsweise einen Metallstift oder eine metallene Zylindermantelhalbschale, erfindungsgemäß sind jedoch auch zwei, drei oder mehr Verstärkungselemente bis hin zu einer Vielzahl von Verstärkungselementen, die beispielsweise als Metallfasern in den elastischen Körper eingearbeitet sind. Erfindungsgemäß wäre auch eine Ausgestaltung des Verstärkungselements als Hohllitze mit netzartigen Wänden, die den elastischen Körper, wiederum mindestenst teilweise, umgibt.

In Ausgestaltung der Erfindung ist vorgesehen, dass mehrere, gegeneinander austauschbare, Verstärkungselemente unterschiedlicher Länge und/oder Durchmessers und/oder Materials vorgesehen sind. Bei dieser vorteilhaften Ausführungsform ist das Verstärkungselement insbesondere ein Metallstift, der bevorzugt koaxial im Inneren des elastischen Körpers aufgenommen ist oder diesen durchsetzt. Der elastische Körper weist hierzu eine axiale Durchgangsbohrung oder Sackbohrung auf, in die der Metallstift einsetzbar ist oder die er durchsetzt. Aufgrund des elastischen Materials des Körpers lassen sich selbst bei feststehendem Durchmesser der Bohrung durchmesserkleinere oder größere Metallstifte in diese kraftschlüssig einsetzen, sofern die Unterschiede in den Durchmessern nicht so groß werden, dass der Metallstift zu lose sitzt oder der elastische Körper einreißt.

Wie bereits erläutert, ist das Verstärkungselement bevorzugt im Inneren des elastischen Körpers aufgenommen, insbesondere in einer axial verlaufenden Bohrung des elastischen Körpers. Anstelle einer Bohrung kann erfindungsgemäß auch ein Umspritzen des Metallstabes mit dem elastomeren Material des elastischen Körpers vorgesehen sein, in diesem Fall ist eine Veränderung der Biegesteifigkeit der Vorrichtung nur durch Austausch der Kombination von elastischem Körper und Verstärkungselement möglich. Die Bohrung kann jedoch auch außermittig axial verlaufend angeordnet sein oder es können mehrere Bohrungen in äquidistanten Winkelabständen vorgesehen sein.

Erfindungsgemäß ist vorgesehen, dass die Biegesteifigkeit der Einheit von elastischem Körper und Verstärkungselement einstellbar ausgebildet und damit an einen Benutzer anpassbar ist, so dass dieselbe Vorrichtung an ganz unterschiedliche physische Konstitutionen der Benutzer und/oder des Einsatzortes des Handgriffs anpassbar ist. Dies reicht von einem Benutzer, der sich fast gar nicht bis zu einem, der sich fast vollständig auf den Handgriff abstützen muss. So kann mit großem Vorteil ein und derselbe Rollator, Rollstuhl, Einkaufswagen, Gehstock, etc. an ganz unterschiedliche Benutzer oder Einsatzorte angepasst werden. Diese Anpassbarkeit wird erfindungsgemäß in einer ersten Alternative durch eine Veränderung des Verstärkungselements erreicht. Eine solche Veränderung betrifft insbesondere einen Austausch gegen ein Verstärkungselement anderer geometrischer Form, anderen Durchmessers, andere Länge, anderen Materials oder eine Mischung aus einem oder mehreren der genannten Veränderungen. Statt die gesamte Vorrichtung für eine Anpassung austauschen zu müssen, muss erfindungsgemäß mit Vorteil lediglich ein Teil derselben ausgetauscht werden, um die Veränderung der Biegesteifigkeit zu erreichen. In einer zweiten und bevorzugten Alternative erfolgt die Anpassung durch eine Veränderung der biegewirksamen axialen Länge des elastischen Körpers. Dies geschieht im einfachsten Fall durch eine veränderte Befestigungstiefe der Befestigungsenden in, an oder um die jeweiligen Rohre, so dass sich der axiale Abstand der beiden Rohre verringert und damit auch die biegewirksame axiale Länge des Körpers. In einer dritten Alternative erfolgt die Anpassung der Biegesteifigkeit der Vorrichtung durch eine Veränderung des Materials des elastischen Körpers, insbesondere durch dessen, auch nur teilweisen, Austausch gegen eines mit einem anderen Biegewiderstandsmoment.

In einer erfindungsgemäßen, zweiten Alternative weist die Vorrichtung eine Hülse auf, die von einem Befestigungsende zum anderen Befestigungsende reversibel arretierbar beweglich ist. Diese Hülse ist damit die biegewirksame axiale Länge des elastischen Körpers verändernd, insbesondere verringernd bis gänzlich ausschaltend, wenn sie die freie axiale Länge vollständig überdeckt. In diesem Fall ist die dämpfende Wirkung des Handgriffs ausgeschaltet. Für die Verwendung bei z.B. Mountainbikes kann dadurch die dämpfende Wirkung beim Bergauffahren reduziert und beim Bergabfahren wieder erhöht werden. Erfindungsgemäß ist auch eine Einstellung mit einem Bowdenzug zentral für beide Handgriffe gleichzeitig und stufenlos.

Für den Fall, dass die Hülse auf der vom elastischen Körper weggewandten Seite der Rohre gleitend ausgebildet ist, weist sie eine oder mehrere Durchgangsöffnungen auf. Es weist auch wenigstens ein Rohr entsprechende Öffnungen auf, die von im Inneren des Rohres angeordneten, kraftbeaufschlagten Arretierelementen durchsetzt werden. Diese durchsetzen dann bei fluchtenden Öffnungen auch die Öffnungen der Hülse lösbar arretierend. Dies ermöglicht eine stufenweise Verstellung der Biegesteifigkeit, da die biegewirksame axiale Länge in konkreten Stufen, nämlich entsprechend dem axialen Abstand der Öffnungen und der Arretierelemente in den Rohren, verstellbar ist.

Nicht erfindungsgemäß ist die Ausgestaltung, wonach der elastische Körper zwei unterschiedlich biegsame Materialien aufweist, von denen eines die biegewirksame axiale Länge bildend ist. Dies stellt eine weitere Möglichkeit dar, die Biegesteifigkeit der Vorrichtung gezielt auszuwählen.

In diesem Fall ist vorgesehen, dass zwischen beiden Materialien eine radiale Trennung vorgesehen ist. Die beiden Materialien sind demnach in bestimmten axialen Abschnitten angeordnet und folgen bevorzugt abwechselnd aufeinander.

Die Erfindung wird nun anhand von drei Figuren näher erläutert, wobei gleiche Bezugszeichen dieselben Teile bezeichnen.
Fig. 1 zeigt einen axialen Längsschnitt durch eine erste Ausführungsform,
Fig. 2 einen schematischen axialen Längsschnitt durch eine nicht erfindungsgemäße Ausführungsform und
Firg. 3 eine dritte schematisch dargestellte nicht erfindungsgemäße Ausführungsform.

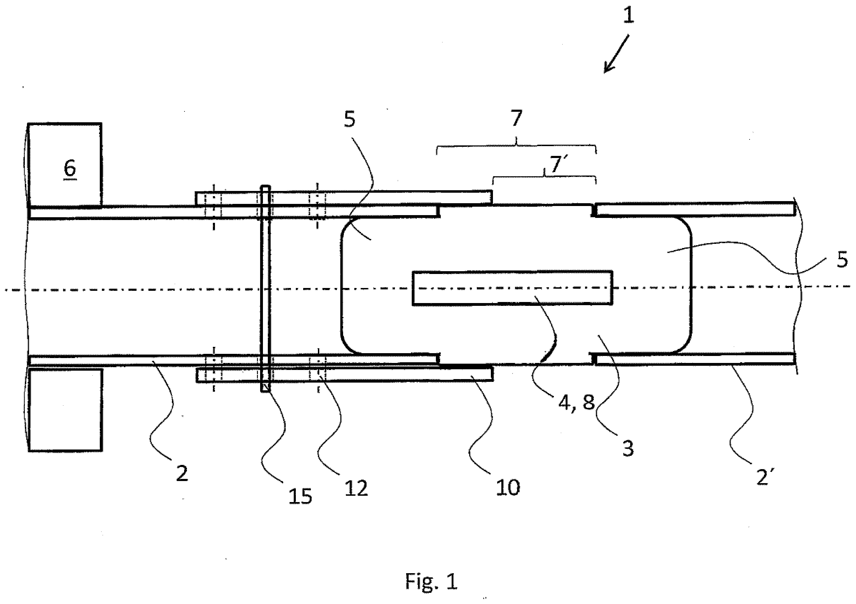

**Fig. 1** zeigt einen schematischen axialen Längsschnitt durch eine erste Ausführungsform der Erfindung. Zu erkennen sind zwei Rohre 2, 2', wobei am links dargestellten Rohr 2 ein Griff 6 schematisch als über das Rohr 2 geschobener Gummikörper angedeutet ist. Das Rohr 2 ist im Griff 6 aufgenommen. Das Rohr 2 endet offen, zu diesem ist axial beabstandet ein zweites Rohr 2' angeordnet. Bei dieser Ausführungsform befindet sich im Inneren der beiden Rohre 2, 2' ein elastischer Körper 3, in dessen Innerem wiederum ein Verstärkungselement 4 befindlich ist. Der elastische Körper 3 ist mit seinen beiden Befestigungsenden 5 kraftschlüssig im Inneren der Rohre 2, 2' aufgenommen, indem er komprimiert wurde. Er schließt daher mehr oder weniger bündig mit der Aussenseite der Rohre 2, 2' im Bereich der biegewirksamen axialen Länge 7 ab. In Fig. 1 dargestellt ist die grundsätzlich vorhandene, biegwirksame axiale Länge 7 und die bei dieser Stellung der Hülle 10 zu Rohr 2 tatsächliche biegewirksame axiale Länge 7'. Das Material des elastischen Körpers 3 ist ein Elastomer mit einer Shore-A-Härte von 50-85, insbesondere von 70. Das Verstärkungselement 4 ist als Metallstift 8 ausgebildet. Es ist vollständig von dem Material des elastischen Körpers 3 umhüllt und so vor Korrosion geschützt. Der Metallstift ist insbesondere ein Federstahlstift. Auf der vom elastischen Körper 3 weggewanden Seite des Rohres 2 ist eine Hülse 10 angeordnet, die bei dieser Innenausführungsform kein Innengewinde aufweist. Somit weist auch das Rohr kein korrespondierendes Außengewinde auf. Stattdessen ist im Inneren des Rohres 2 ein gegen eine Federkraft verkürzbarer Arretierstift 15 vorgesehen, der durch eine der Durchgangsöffnungen 12 der Hülse 10 hindurchtritt und diese somit arretiert. Die Hülse 10 weist mehrere, axial beabstandete Durchgangsöffnungen 12 auf, sodass sie die biegewirksame axiale Länge 7 gestuft verändert, indem sie eine Biegung des in ihr aufgenommenen Teils des elastischen Körpers verhindert. Damit ist die biegewirksame axiale Länge 7 verringert. Eine der beiden erfindungsgemäßen Endlagen der Hülse 10 ist die vollständige Überdeckung der biegewirksamen axialen Länge 7, womit die Federwirkung des erfindungsgemäßen Handgriffs 1 ausgeschaltet ist. Die Erfindung kann mit großem Vorteil als Austauschteil in bestehende Rollatoren, Rollstühle, Einkaufswägen etc. eingebaut werden, um die zuvor nicht gefederten Handgriffe durch gefederte Handgriffe zu ersetzen. In diesem Fall würde der vorhandene Handgriff auf Rohrrahmen durch den erfindungsgemäßen ersetzt.

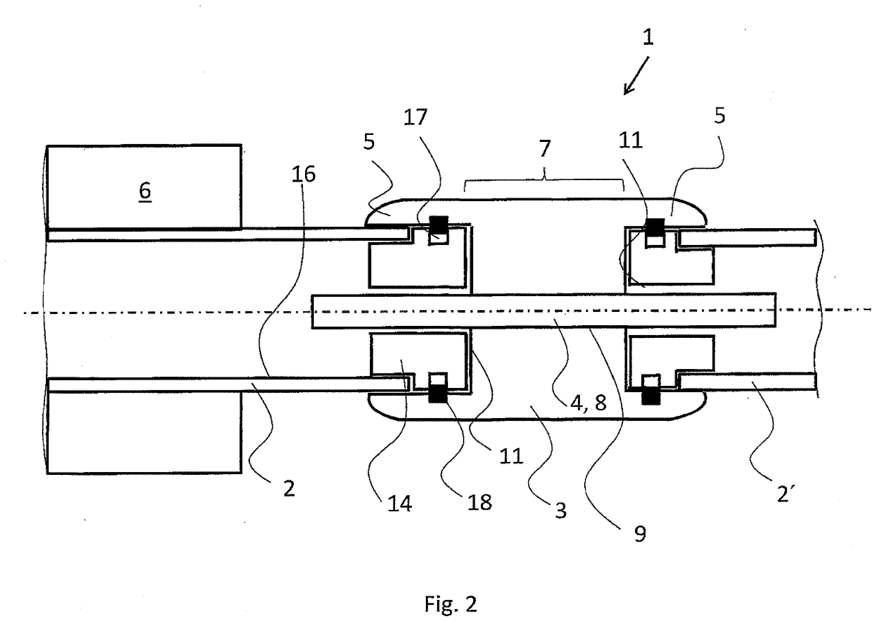

**Fig. 2** zeigt eine nicht erfindungsgemäße Ausführungsform. Diese unterscheidet sich von der ersten vor allem durch die Anordnung von elastischem Körper 3 und Rohren 2, 2' zueinander, wohingegen auch hier ein Verstärkungselement 4 im elastischen Körper 3 angeordet ist. Bei dieser Ausführungsform ist der elastische Körper 3 außen auf den Rohren 2, 2'angeordnet, die wiederum axial beabstandet voneinander ausgebildet sind. Die jeweiligen Rohrenden sind jeweils in einer axial zurückgesetzten Ausnehmung 11 des elastischen Körpers 3 aufgenommen, insbesondere kraftschlüssig aufgenommen. Das Verstärkungselement 4, hier wiederum ein Metallstift, ragt dabei jeweils in die Ausnehmung 11 hinein und endet jeweils im Inneren des Rohres 2, 2'. Bei äußerst starker Biegung des elastischen Körpers 3 sorgt das nicht mit gebogene Verstärkungslement 4 durch Anlage an den Abschlußkörper 14 oder auch ggf. an die Rohrinnenwand 16 für eine Biegebegrenzung. Das Verstärkungselement 4 ist dabei in einer axialen Bohrung 9 im elastischen Körper 3 aufgenommen. Das Umspritzen des Verstärkungselements wie in Fig. 1 dargestellt wäre für diese Ausführungsform ebenfalls möglich, genauso, wie das Einsetzen in eine axiale Bohrung anstelle des Umspritzens bei der ersten Ausführungsform gemäß Fig. 1. Es sind dabei mehrere Einheiten aus elastischem Körper 3 und Verstärkungselement 4 vorgesehen, die sich in der axialen Länge und hinsichtlich des Verstärkungselements in Durchmesser sowie Anzahl und räumlicher Anordnung im elastischen Körper unterscheiden und damit in ihrer Biegefähigkeit. Hierdurch ist eine Einstellbarkeit der Federwirkung des erfindungsgemäßen Handgriffs 1 ermöglicht. Gleiches gilt auch für die in Fig. 1 beschriebenen Ausführungsform. Zum Einstellen wird beispielsweise die montierte Einheit durchgesägt und gegen eine andere ausgetauscht. Zusätzlich zu der zuvor geschilderten und erfindungsgemäßen Grundausführung der Erfindung ist in Fig. 2 eine Ausführungsform dargestellt, bei der in der Ausnehmung 11 zusätzlich ein Abschlußkörper 14 angeordnet ist. Dieser kontaktiert zum einen die Innenseite 16 eines Rohres 2 als auch den Grund und die Wand der Ausnehmung 11. Er weist eine axiale Bohrung auf, durch die der Verstärkungskörper 4 hindurchtritt. Dargestellt ist ein Spiel zwischen Bohrungswand und Verstärkungskörper, das bei dieser Ausführungsform ebenfalls zu einer Begrenzung der möglichen Biegung des elastischen Körpers 3 durch Anlage des Verstärkungslements 4 an die Bohrungswand führt. Durch Wahl der Größe des Spiels ist diese Begrenzung einstellbar. Der Abschlußkörper 14 trägt auf seiner radial auswärtigen Seite eine Umfangsnut 17, in der ein Sprengring 18 angeordnet ist. Dieser läßt sich bei der Montage bis auf den Rohraußendurchmesser zusammendrücken und verankert sich danach im Material des elastischen Körpers 3. Dies geschieht in der Regel irreversibel. In einer Ausgestaltung weisen Abschlußkörper 14 und Rohrinnenseite 16 zueinander korrespondierende Gewinde auf, so dass der Abschlußkörper 14 in das Rohrende einschraubbar ist.

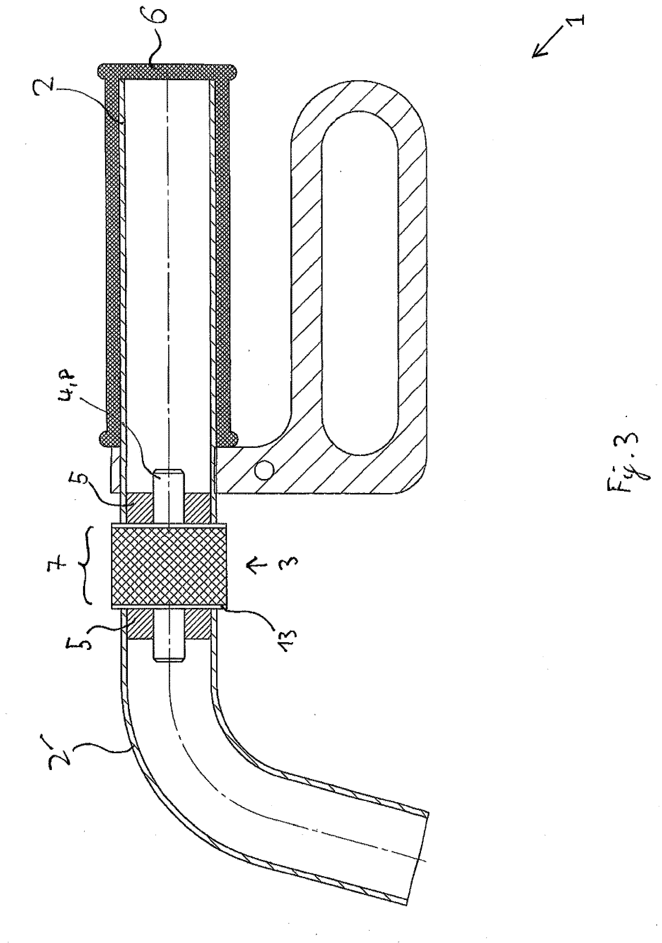

**Fig. 3** zeigt eine weitere nicht erfindungsgemäße Ausführungsform des Handgriffs 1, bei der der elastische Körper 3 aus zwei Materialien besteht. Die beiden Befestigungsenden 5 sind wiederum in einem Rohr 2, 2' aufgenommen und bestehen aus einem ersten Material. Zwischen erstem und zweitem Material befindet sich eine radiale Trennung 13, die hier als Metallscheibe ausgebildet ist. An den beiden radialen Trennungen 13 sind Verstärkungselemente 4 angeordnet, nämlich Metallstifte 8, die jeweils in das Rohrinnere 16 hineinragen und koaxialer angeordnet sind. Zwischen den beiden radialen Trennungen 13 befindet sich das zweite Material des elastischen Körpers 3, nämlich ein Gummi. Eine Einstellbarkeit der Federwirkung ist auch hier durch Austausch gegen einen elastischen Körper mit einer anderen axialen Ausdehnung des zweiten Materials möglich.

Die Erfindung stellt einen gefederten Handgriff zur Verfügung, insbesondere für bewegliche, geschobene Gegenständen wie Rollstühle, Rollatoren, Kinderwagen, Einkaufwagen, Gepäckwagen aber auch für Geh- und Wanderstöcke, Fahrräder und der gleichen mehr, auch als Austauschteil. Mit großem Vorteil eröffnet die Erfindung die Möglichkeit, die Federung einzustellen, in dem die Wirksamkeit des stoßdämpfenden Elementes bis auf Null begrenzbar ist.

### BEZUGSZEICHENLISTE

- 1: Handgriff
- 2: Rohr
- 3: elastischer Körper
- 4: Verstärkungselement
- 5: Befestigungsende
- 6: Griff
- 7: biegewirksame axiale Länge
- 8: Metallstift
- 9: axial verlaufende Bohrung
- 10: Hülse
- 11: Ausnehmung
- 12: Durchgangsöffnung
- 13: radiale Trennung
- 14: Abschlußkörper
- 15: Arretierstift
- 16: Rohrinnenseite
- 17: Umfangsnut
- 18: Sprengring

## Patentansprüche

1. Handgriff (1), aufweisend ein erstes Rohr (2), an dem ein Griff (6) angeordnet ist und ein vom ersten Rohr (2) axial beabstandetes zweites Rohr (2'), weiter aufweisend einen elastischen Körper (3) aus einem Elastomer als erstem Material mit einer ersten Biegesteifigkeit und wenigstens ein Verstärkungselement (4) aus einem zweiten Material mit einer zweiten Biegesteifigkeit, wobei die erste Biegesteifigkeit kleiner als die zweite Biegesteifigkeit ist, wobei das Verstärkungselement (4) ganz oder teilweise in dem elastischen Körper (3) aufgenommen ist, wobei der elastische Körper (3) zwei einander gegenüberliegende Befestigungsenden (5) aufweist, mit denen er jeweils an einem Rohr (2, 2') befestigt ist, wobei der elastische Körper (3) zwischen beiden Befestigungsenden (5) bei in beliebiger radialer Richtung auf ein Befestigungsende (5) einwirkender Kraft eine biegewirksame axiale Länge (7) aufweist, wobei die biegewirksame axiale Länge ein Teil oder die gesamte axiale Länge ist, die zwischen den Rohren (2, 2') befindlich ist und die den axialen Abstand der beiden Rohre (2, 2') voneinander definiert, wobei die Biegesteifigkeit das Maß der sich bei in etwas radial gerichteter Kraftausübung auf eines seiner Befestigungsenden (5) einstellende radiale Auslenkung im Verhältnis zum nicht mit Kraft beaufschlagten gegenüberliegenden Befestigungsende (5) ist, **dadurch gekennzeichnet, dass** die Biegesteifigkeit der Einheit von elastischem Körper (3) und Verstärkungselement (4) durch Veränderung der biegewirksamen axialen Länge (7) einstellbar ausgebildet ist, entweder
- durch Veränderung der Befestigungstiefe der Befestigungsenden (5) in den Rohren (2, 2'), so dass sich der axiale Abstand der beiden Rohre (2, 2') verringert oder
- durch eine von einem Befestigungsende (5) zum anderen Befestigungsende (5) reversibel arretierbar bewegliche Hülse.

2. Handgriff (1) gemäß Anspruch 1, **dadurch gekennzeichnet, dass** das Verstärkungselement (4) aus Metall besteht oder dieses aufweist und insbesondere ein Metallstift (8) ist.

3. Handgriff (1) gemäß Anspruch 1 oder 2, **dadurch gekennzeichnet, dass** mehrere, gegeneinander austauschbare, Verstärkungselemente (4) unterschiedlicher Länge und/oder Durchmessers und/oder Materials vorgesehen sind.

4. Handgriff (1) gemäß einem der vorherigen Ansprüche, **dadurch gekennzeichnet, dass** das Verstärkungselement (4) im Inneren des elastischen Körpers (3) aufgenommen ist, insbesondere in einer axial verlaufenden Bohrung (9) des elastischen Körpers (3).

5. Handgriff (1) gemäß einem der vorherigen Ansprüche, **dadurch gekennzeichnet, dass** die Hülse (10) ein Innengewinde und/oder eine oder mehrere Durchgangsöffnungen (12) aufweist.

## Claims

1. A handle (1) comprising a first tube (2), on which a grip (6) is arranged, and a second tube (2') that is axially spaced apart from the first tube (2), and furthermore comprising an elastic body (3) of an elastomer as a first material with a first flexural rigidity and at least one reinforcing element (4) of a second material with a second flexural rigidity, wherein the first flexural rigidity is smaller than the second flexural rigidity, wherein the reinforcing element (4) is entirely or partially accommodated in the elastic body (3), wherein the elastic body (3) has two opposite fastening ends (5), by means of which it is respectively fastened on a tube (2, 2'), wherein the elastic body (3) has between both fastening ends (5) a flexurally active axial length (7) under the influence of a force acting upon a fastening end (5) in an arbitrary radial direction, wherein the flexurally active axial length is a part of or the entire axial length, which is located between the tubes (2, 2') and defines the axial distance of both tubes (2, 2') from one another, and wherein the flexural rigidity is the degree of the radial excursion, which occurs when an approximately radially directed force is exerted upon one of its fastening ends (5) in relation to the opposite fastening end (5), upon which no force is exerted,
**characterized in that** the flexural rigidity of the unit consisting of the elastic body (3) and the reinforcing element (4) can be adjusted by varying the flexurally active axial length (7) either
- by varying the fastening depth of the fastening ends (5) in the tubes (2, 2') such that the axial distance between both tubes (2, 2') is reduced or
- by means of a sleeve that can be reversibly locked and moved from one fastening end (5) to the other fastening end (5).

2. The handle (1) according to claim 1, **characterized in that** the reinforcing element (4) consists of or contains metal and particularly is a metal pin (8).

3. The handle (1) according to claim 1 or 2, **characterized in that** multiple interchangeable reinforcing elements (4) of different length and/or diameter and/or material are provided.

4. The handle (1) according to one of the preceding claims, **characterized in that** the reinforcing element (4) is accommodated in the interior of the elastic body (3), particularly in an axially extending bore (9) of the elastic body (3).

5. The handle (1) according to one of the preceding claims, **characterized in that** the sleeve (10) has an internal thread and/or one or more through-openings (12) .

## Revendications

1. Poignée (1), comportant un premier tube (2), sur lequel est placé un manche (6) et un second tube (2'), écarté en direction axiale du premier tube (2) comportant par ailleurs un corps (3) élastique en un élastomère en tant que première matière, faisant preuve d'une première résistance à la flexion et au moins un élément de renfort (4) en une seconde matière, faisant preuve d'une seconde résistance à la flexion, la première résistance à la flexion étant inférieure à la seconde résistance à la flexion, l'élément de renfort (4) étant réceptionné entièrement ou en partie dans le corps (3) élastique, le corps (3) élastique comportant deux extrémités de fixation (5) mutuellement opposées, à l'aide desquelles il est chaque fois fixé sur un tube (2, 2'),
lorsqu'une force est exercée dans une direction quelconque sur une extrémité de fixation (5), le corps (3) élastique présentant entre les deux extrémités de fixation (5) une longueur (7) axiale efficace en flexion, la longueur axiale efficace en flexion étant une partie ou la totalité de la longueur axiale qui se trouve entre les deux tubes (2, 2') et qui définit l'écart axial réciproque entre les deux tubes (2, 2'), la résistance à la flexion étant la dimension de la déviation radiale qui, lorsque l'exercice de la force est dirigé approximativement en direction radiale sur l'une de ses extrémités de fixation (5), s'établit par rapport à l'extrémité de fixation (5) opposée, non soumise à une force,
**caractérisée en ce que** la résistance à la flexion de l'unité formée par le corps (3) élastique et l'élément de renfort (4) est conçue de sorte à être réglable par variation de la longueur (7) axiale efficace en flexion, soit
- par variation de la profondeur de fixation des extrémités de fixation (5) dans les tubes (2, 2'), de sorte à réduire l'écart axial entre les deux tubes (2, 2') ou
- par une douille mobile, susceptible d'être bloquée de manière réversible d'une extrémité de fixation (5) vers l'autre extrémité de fixation (5) .

2. Poignée (1) selon la revendication 1, **caractérisée en ce que** l'élément de renfort (4) est constitué de métal ou en comporte et est notamment un goujon métallique (8) .

3. Poignée (1) selon la revendication 1 ou 2, **caractérisée en ce que** plusieurs éléments de renfort (4) interchangeables entre eux, de différente longueur et/ou de différent diamètre et/ou en différentes matières sont prévus.

4. Poignée (1) selon l'une quelconque des revendications précédentes, **caractérisée en ce que** l'élément de renfort (4) est prévu à l'intérieur du corps (3) élastique, notamment dans un alésage (9) s'écoulant en direction axiale du corps (3) élastique.

5. Poignée (1) selon l'une quelconque des revendications précédentes, **caractérisée en ce que** la douille (10) comporte un taraudage et/ou un ou plusieurs orifices de passage (12).
